# EUROPEAN PATENT SPECIFICATION

(11) **EP 1 880 935 B1**
(45) Date of publication and mention of the grant of the patent: **15.12.2010**
(21) Application number: 06122057.0
(22) Date of filing: 10.10.2006
(51) Int. Cl.: B62K 21/12

(54) **Handle-bar for motorcycles**
Motorradlenker
Guidon de motocyclette

(30) Priority: 21.07.2006 IT RM20060393
(43) Date of publication of application: 23.01.2008
(73) Proprietor: Cometa S.r.l., 66043 Casoli CH (IT)
(72) Inventor: Scalzi, Gabriele, 66022, Fossacesia CH (IT)
(74) Representative: Papa, Elisabetta

(56) References cited:
- EP-A- 1 577 205
- US-A- 5 503 773
- US-A- 5 950 497
- US-A1- 2005 257 640
- US-A1- 2005 268 742

## Description

### Field of the invention

The present invention relates to a steering device, in particular an elongated handlebar, for motorcycles.

### Background of the invention

To obtain the change in direction of motion (steering) of motorcycles, a steering handlebar is used. The handlebar acts as a lever having its fulcrum in its central segment, wherein it is connected to the front fork of the motorcycle. The steering handlebar is moved by the vehicle driver with his/her two hands, which act on the handles positioned at the two ends of the handlebar itself, enabling the transformation of the force (s)he exerts onto the handles into a moment that cause the front wheel to rotate and hence the vehicle to turn.

On the vehicle wheel act also the reaction forces of the ground, the moment of which may cause rotations and hence undesired changes in direction of motion of the vehicle. Therefore, during the travel of the motorcycle the driver can exert a force by means of the handlebar, which, through the aforementioned lever effect, is converted into a driving moment that opposes the aforesaid undesired rotation effects, thereby enabling to maintain the desired traveling direction.

Moreover, the steering handlebar provides the driver (together with the seat and the footrests) with gripping points, through which the driver exerts, by means of his/her arms, the forces to maintain his/her position stable and secure during the motorcycle travel. In particular, the forces of inertia acting on the driver's body due to the speed variations the driver imposes on the vehicle during its motion (accelerations, slow-downs, turns, etc.) would tend to modify the driver's position even in a dangerous way, with the serious risk of making him/her fall off the motorcycle. Such inertia forces are thus contrasted by means of the forces exerted onto the gripping points, so that said undesired "attitude variations" (for example "pitch-up" during an acceleration phase, "dip-down" during a braking phase, etc.) are avoided.

On the handlebar are also transmitted the stresses due to the vibrations that are generated during the motorcycle travel, both by effect of the interactions between the vehicle and the ground with its irregularities and of the consequent forces acting on the vehicle, and by effect of the vibrations produced by the operation of the motorcycle endothermic engine.

According to the above, during motorcycle travel the steering handlebar is subjected to numerous stresses, both of flexion and shear, having horizontal and vertical direction, and to torsion stresses. Said stresses are also fatiguing because of the numerous and continuous variations in their entity and direction during the travel.

Said shear and flexion stresses can be resolved in components along both the horizontal direction, herein intended as the direction parallel to the vehicle forward/backward traveling direction, and the vertical direction, i.e. the gravitational direction perpendicular to the vehicle traveling one. Depending on the type of use of the vehicle, and particularly on the traveling conditions/terrains it is intended for, the first or the second component is prevalent. For example, for motorcycles for so-called "road" use (i.e. on paved roads), horizontal forces are prevalent, mainly generated by effect of the inertias due to variations in velocity of the vehicle, whereas for motorcycles for so-called "off-road" use (i.e. on unpaved roads), vertical forces are prevalent, i.e. those produced mainly by the interactions between the vehicle and the ground and by the consequent inertias.

Furthermore, on the outer surface of the handlebar there are installed different accessory components that they can be used and/or operated by the driver while driving the motorcycle. As the handlebar generally has a tubular, i.e. hollow, structure, in proximity of the handlebar longitudinal ends there are installed the "terminals" of the handlebar itself, i.e. elements closing the inner cavity of the handlebar tube. Always at said handlebar ends, handles enabling the driver to grip it securely with his/her hands and to control (usually through the right side handle) the acceleration of the vehicle are arranged. Moreover, on the lateral segments of the handlebar the manual control levers for the front brake and the clutch (if manually actuated), the reservoir containing the liquid for the brake actuation line, the blocks containing the pushbuttons controlling the various electrical devices (engine start, light switch / selector, horn) and the rear-view mirrors are also fastened.

With regard to the previously listed components installed on the handlebar, the handles are installed by interference on the outer surface of the ends of the handlebar, and therefore induce a certain compression stress. The terminals are instead cylindrical elements that are generally mounted by interference on the inner surface of the handlebar tube, therefore producing a traction stress, quite significant in size if produced by a threaded connections. The other components (levers, electric blocks, mirrors) are mounted in most cases by means of "rings" which are fastened onto the handlebar with threaded connections, locally generating sizeable compression forces.

Therefore, summarizing the above, the motorcycle handlebar serves some essential functions for the proper and safe use of the vehicle, also of the "structural" kind, because on it act some of the main forces that stem from the travel of the vehicle itself, and forces of relevant size due to the installation, on the handlebar, of different functional components of the motorcycle.

According to the state of the art, the steering handlebar, in a rather common embodiment, consists of a single, symmetrical, appropriately shaped metallic part having a tubular section and mounted on the motorcycle with the tube longitudinal axis perpendicular to the vehicle traveling direction.

The overall shape of the handlebar is generally obtained by: a rectilinear tubular central segment, generally having circular cross section; two external rectilinear tubular segments, generally with circular cross section too, the axes of symmetry of which do not coincide with that of the central segment and the outer diameters of which are equal to that of the central segment; and two bent tubular segments which join the central segment with the external ones, having constant outer diameter.

The bent segments cause the handlebar to have a typical "bull horns" shape. The handlebar geometry (width, radii of curvature, length of the various segments, etc.), together with the position of the seat and of the footrests, determines the traveling posture of the driver and the use characteristics of the vehicle. Accordingly, said characteristics should vary depending upon the type (road, off-road, cross-country, etc.), brand and model of the motorcycle.

Because of the previously illustrated stresses, the steering handlebar should be dimensioned adequately in order to achieve reliability of behavior both under ordinary use conditions (behavior within the elastic deformation range), and in emergency situations (behavior in the plastic deformation range).

As mentioned above, known steering handlebars are ordinarily made of a metallic material. Commonly, steel is used, because of its mechanical strength and stiffness characteristics, as well as its high tenacity and resilience, or high-strength light aluminum alloys are used (e.g. alloy Al 7075, so-called Ergal) which, as well known, have lesser density than steel (2.7 kg/dm³ of aluminum, as opposed to 7.85 Kg/dm³ of steel) and mechanical strength properties comparable thereto, with higher costs.

Among the stresses acting on the steering handlebar, the prevalent ones are shear and above all the bending moment.

Below is described the profile of the stress characteristics along the axis of the handlebar tube, considering that it behaves like a beam supported in two points (i.e. the areas where it connects with the vehicle, positioned in the central segment of the handlebar tube), positioned symmetrically relative to the vehicle centerline and having the free ends whereon the forces act.

The shear forces (direction of action substantially perpendicular to the longitudinal axis of the tube) is nil in the intermediate segment between the two supports, and it assumes a constant value along the segments to the right and left relative to the supports, hence along the bent segments and the outer rectilinear segments to the ends.

The bending moment (direction of action substantially parallel to the vertical symmetry axis of the handlebar) have zero value at the free ends of the outer rectilinear segments of the tube, whereas it grows linearly as the axis of symmetry of the handlebar approaches, to reach a maximum value in proximity of the two support joints with the vehicle fork. Such flexion moment assumes a constant, maximum, value in the intermediate segment between the two set joints.

As the resistance against the (prevalent) bending stress grows as the moment of inertia of the resistant section grows, and hence as its dimensions grow, the tubular cross section of the handlebar should have greater diameter near the points connecting the handlebar to the vehicle, and smaller diameter near the ends (reducing section and mass), where the bending moment is smaller and hence a larger diameter is not necessary. In this respect, some types of state of the art steering handlebars are constructed with a variable circular section, in particular greater in proximity to the support joints, employing the rotary hammering technology (using so-called "swaging machines") which enables, starting from an initial tube with a predetermined outer diameter, to obtain the reduction of said outer diameter for the tube segments that are more distant from the supports and nearer to the ends (at both sides). In this way, the handlebar has greater strength (greater diameter) in the support area (more highly stressed), and lesser strength (lesser diameter) at the ends (less stressed).

A few known technical solutions provide the thickness of the tubular handlebar cross-section be different at the handlebar ends with respect to its central region, as in US 5,117,708 and US 5,257,552.

US 2005/257640 discloses a bicycle handlebar of improved stiffness, strength and comfort. This handlebar comprises a central portion of greater diameter, having a cylindrical external surface and an internal surface of an elliptic cross-section, wherein the ellipse greater axis is arranged horizontally. At each side of the central portion a respective intermediate portion and a respective handling portion are provided. Intermediate portions have a uniform section thickness, and in particular an elliptic cross-section with the ellipse main axis arranged vertically. Handling portions have the same geometry as the central portion.

US 2005/268742 discloses a handlebar for motocross motorcycles meant to inhibit an impact load from transferring to the rider. Handlebar has a central portion having at each side thereof a rising portion and an end portion. Central portion has a greater diameter than the end portions. At central portion, handlebar has a cross-section with a circular external surface and an elliptic internal surface. The latter has the main axis oriented according to the impact load, i.e. inclined with respect to the horizontal direction.

US 5,503,773 discloses a method of making a composite handlebar, the latter having a central portion of greater thickness and non-uniform cross-section be different at the handlebar ends with respect to its central region, as in US 5,117,708 and US 5,257,552.

However, known art devices do not provide for an optimal compromise between mechanical resistance of the handlebar at flexional and compression stresses on the one hand and material and cost saving on the other.

### Summary of the invention

Hence, the technical problem set and solved by the present invention is to provide a steering handlebar overcoming the drawbacks mentioned hereto with reference to the known art.

Such a problem is solved by a steering device according to claim 1.

Preferred features of the present invention are provided for in the dependent claims thereof.

The present invention provides several relevant advantages. The main advantage lies in that the device of the invention is optimally dimensioned for the prevalent flexion stresses and also for the compression stresses, at the same time requiring a minimal material quantity.

Moreover, the device of the invention allows an easy installation of the vehicle accessories.

### Short description of the drawings

Other advantages, features and the operation modes of the present invention will be made evident from the following detailed description of some embodiments thereof, given by way of example and not for limitative purposes. Reference will be made to the figures of the annexed drawings, wherein:
- Fig. 1 shows a prospective view of a steering device which is not according to the invention, but useful to understand the present invention;
- Fig. 1A shows a cross sectional view of a portion of the steering device according to an embodiment of the present invention;
- Fig. 2a shows a frontal view of the steering device of Fig. 1;
- Fig. 2b shown a top plan view of the steering device of Fig. 1;
- Figs. 3a, 3b, 4a, 4b and 5 each show in more detail a respective cross sectional view of those of Figs. 1 and 1a, taken along lines S4-S4 (for Figs. 3a and 3b), S2-S2 (for Fig. 4a), S1-S1 (for Fig. 4b) and S3-S3 (for Fig. 5) of Fig.2a;
- Figs. 6-8 and 9a, 9b each show a respective longitudinal sectional view relating to the construction modes of the steering device of Figs. 1 and 1 a;
- Figs. 10a e 10b show a lateral and perspective frontal view, respectively, of a motorcycle carrying the steering device of Fig. 1; and
- Fig. 10c shows a perspective view of the device of Fig. 1 with motorcycle accessories installed thereon.

### Detailed description

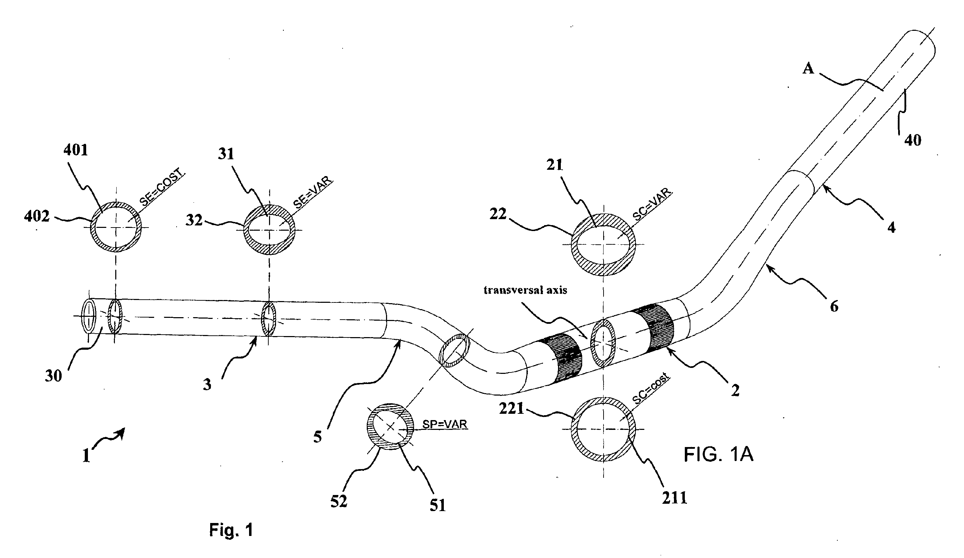

With initial reference to Fig. 1, a steering device is globally denoted by 1.

Steering device 1 is a hollow handlebar with a globally elongated shape, and comprises mainly:
- a central portion 2, having a substantially rectilinear development;
- a first and a second external portion 3 and 4, respectively, both having a substantially rectilinear development inclined with respect to that of central portion 2; and
- a first and a second transition portion 5 and 6, respectively, both having a substantially curved development and each interposed between central portion 2 and a respective first or second external portion 3 or 4.

In the present embodiment, portions 2-6 are arranged one adjacent the other and are integral one another.

For greater clarity, in the following description reference will be made to longitudinal line A of steering device 1, defined as the line passing through the centers of the cross sections of device 1 itself, and to the transversal axis of each of such sections, the latter being the straight line orthogonal to the longitudinal axis A and passing through the center of the section in the forward/backward riding direction of the motorcycle.

As mentioned above, the direction of longitudinal line A in the handlebar segments corresponding to external portions 3 and 4 is inclined with respect to that of the segment corresponding to central portion 2 and with respect to that of the segments corresponding to transition portions 5 and 6.

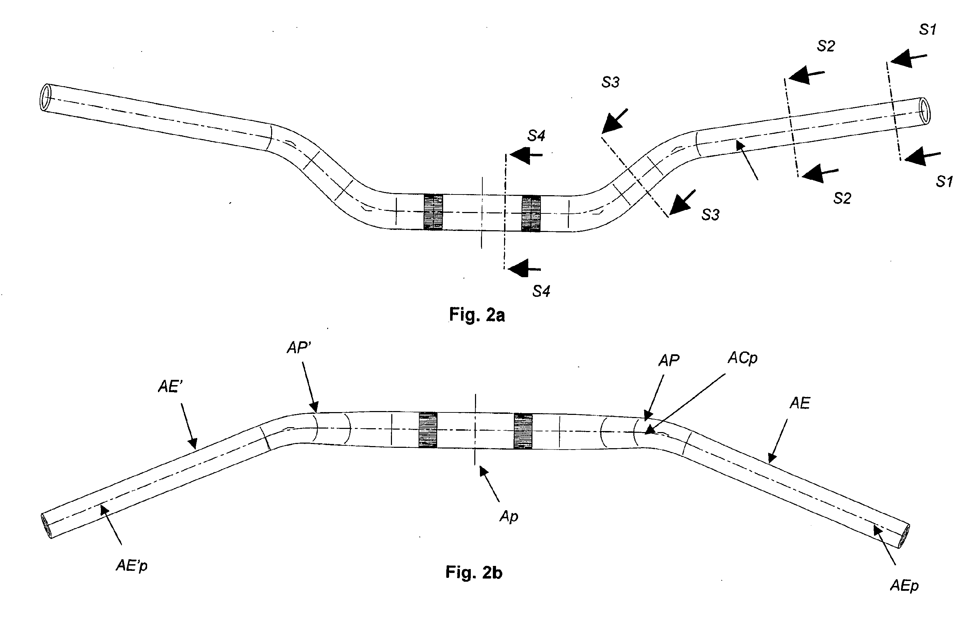

The geometry of device 1 is such that at central portion 2 and transient portions 5 and 6 longitudinal line A develops substantially onto the same vertical plane, which is parallel to the plane of Fig. 2a and the projection of which is denoted by *Acp* in Fig. 2b.

At each of external portions 3 and 4, longitudinal line A lies instead onto a respective vertical plane, which planes are incident one another and with the vertical plane corresponding to central portion 2 and transient portions 5 and 6. The projections of such planes are denoted by *AE'p* and *AEp,* respectively, in Fig. 2b.

Moreover, steering device 1 is substantially symmetric with respect to a vertical plane passing through the central cross-section of portion 2, the projection of which is denoted by *Ap* in Fig.2b.

The features of the cross section of each of said portions 2-6 will be now described in greater detail.

Central portion 2 has a hollow cross section defined by an inner wall 21 and an outer wall 22. Inner wall 21 has a substantially elliptical profile being concentrically arranged with respect to outer wall 22, the latter having a substantially circular profile. Accordingly, the handlebar thickness along each cross section of central portion 2 is not uniform and therefore not according to the invention.

The elliptical profile of inner wall 21 is so-oriented that the ellipse principal (i.e. longer) axis coincides with the section transversal axis as defined above.

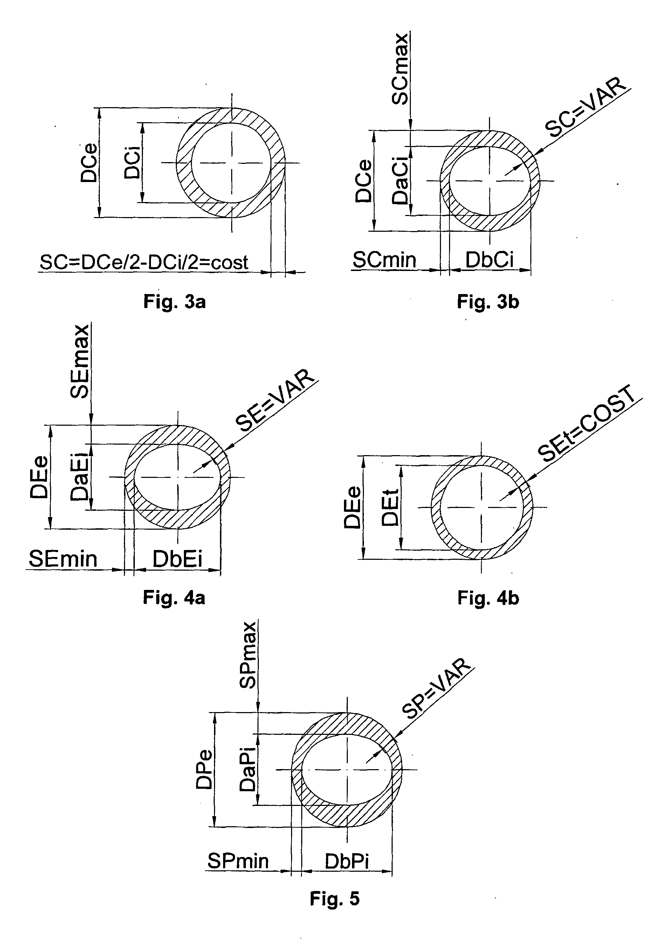

In Fig. 3b, the external diameter of such cross section is denoted by DCe, the ellipse principal axis by *DbCi* and the ellipse secondary axis by *DaCi.* As mentioned above, thickness along the section is not uniform and variable between a minimal value *SCmin* = *DCe*/*2* - *DbCil2* and a maximal value *SCmax* = *DCe*/*2* - *DaCi*/*2.* Such thickness is for example comprised in a range of about 2,0 - 3,5 mm.

According to an embodiment of the invention shown in Fig. 1A, the cross section of central portion 2 has an outer and an inner wall, 221 and 211, respectively, both of a substantially circular profile and substantially concentrically arranged. Therefore, in this case handlebar 1 has a substantially uniform thickness along each cross section.

In Fig. 3a, the external diameter of such section is denoted by DCe, the internal diameter by *DCi,* the uniform thickness by *SC* = *DCe*/*2* - *Dcil2.* For example, external diameter *DCe* can be comprised in a range of about 28 - 30 mm and internal diameter *DCi* in a range of about 22 - 24 mm.

The external portions 3 and 4 are identical in their cross section. Accordingly, only first portion 3 will be now described. This portion has a cross section analogous to that of central portion 2, being defined by an inner wall 31 with a substantially elliptical profile and an outer wall 32 with a substantially circular profile, the two walls 31 and 32 being concentrically arranged. Also in this case, the elliptical profile of inner wall 31 is so-oriented that the ellipse principal axis coincides with section transversal axis as defined above.

In some cases, relating to specific handlebars having a peculiar geometry, the elliptical profile of said inner wall (31) is oriented always according to the direction of the maximal stress acting upon the device during operation. This implies that the greater wall thickness is always oriented so as to oppose/resist forces exerted during motion.

Also in such cases portions 3 and 4 have the same orientation one with respect to the other, which orientation might be different from that of central portion 2.

In Fig. 4a, the external diameter of such section is denoted by *DbEi* and is equal for example to about 22 mm, the ellipse principal axis by *DaEi* and the ellipse secondary axis by *DaEi.* Accordingly, handlebar thickness is not uniform along the cross section and variable between a minimal value *SEmin* = *DEe*/*2* - *DbEi*/*2* and a maximal value *SEmax* = *DCe*/*2* - *DaEi*/*2.* Such thickness can be for example comprised in a range of about 2,0 - 3,5 mm.

Preferably, each external portion 3, 4 has an end sub-portion, denoted by 30 and 40, respectively, with a hollow cross section defined by an inner wall (denoted by 401 for sub-portion 40) and an outer wall (denoted by 402 for sub-portion 40) one concentric to the other and both of a substantially circular profile.

In Fig. 4b, the external diameter of such end sections is denoted by *DEe,* the internal diameter by *DEt,* the corresponding handlebar uniform thickness as *SEt* = *DEe*/*2* - *DEt*/*2.* Thickness *SEt* has a value less than or equal to the minimal thickness *SEmin* of the adjacent handlebar portion having an elliptical internal profile, and is for example equal to about 2 mm.

Inclined transition portions 5 and 6 are also identical one to the other. Therefore, only portion 5 will be described. This portion has a cross-section analogous to that of central portion 2, being defined by an inner wall 51 with a substantially elliptical profile and an outer wall 52 with a substantially circular profile, the two walls 51 and 52 being concentrically arranged. Also in this case, the elliptical profile of inner wall 51 is so-oriented that the ellipse principal axis coincides with the section transversal axis as defined above.

In some cases, portions 5 and 6, having the same orientation with respect to central portion 2, may have a different orientation with respect to portions 3 and 4, as already mentioned above.

In Fig. 5, the external diameter of such section is denoted by *DPe* and its value is comprised between DCe and DEe, and therefore for example between 22 and 28-30 mm, the ellipse principal axis is denoted by *DbPi* and the ellipse secondary axis by *DaPi.* Also in this case, thickness along the section is not uniform and variable between a minimal value *SPmin* = *DPe*/*2 - DbPi*/*2* and a maximal value *SPmax* = *DPe*/*2* - *DaPi*/*2a.* Such thickness is comprised for example in a range of about 2,0 - 3,5 mm.

The device described so far provides that, by virtue of the orientation of the elliptical cross sections, greater thicknesses are obtained towards and at the vertical direction. This makes the steering device 1 particularly suitable for so-called "off-road" vehicles, wherein, as explained before, stresses are mainly vertical.

According to an embodiment of the invention, the part of the steering device having greater thicknesses (i.e. the portions at the secondary axis of the ellipse making the internal profile of the device cross sections) is oriented according to an horizontal axis, and specifically the aforementioned transverse section axis, so that greater thicknesses are obtained horizontally. In this way, the steering device is particularly suitable for so-called "road" motorcycles, wherein, as explained before, stresses are mainly horizontal.

As mentioned above, in specific applications, relating to device geometry, it is possible to adapt the orientation of portions 3 and 4 to improve/adequate the device mechanical resistance to pluri-directional stresses occurring during riding.

It will be better appreciated at this point that the thickness of the steering device is differentiated in the horizontal direction, i.e. the riding direction of the motorcycle, and in the vertical (gravitational) direction. As mentioned above, this allows obtaining a sufficient resistance to flexional moments on the one hand and to compression stresses on the other hand, at the same time using the minimal material quantity to reach such resistance.

Generally speaking, the chosen material distribution and the consequent mechanical resistance are optimized just at the portions which are more stressed by the prevailing flexion forces, and this is achieved by virtue of said non-uniform thickness of external portions 3 and 4, of transient portions 5 and 6 and also of central portion 2 in the device of Fig. 1. Such choice of a variable thickness, which is optimized when an elliptical shape for the internal profile of said cross sections is selected, allows the taking away of material in the areas and directions less stressed.

In this way, the steering device of the invention is also perfectly able to withstand the stresses generated during assembling.

The reduction in mass allowed by the hollow sections and the aforementioned material distribution can be estimated in 10-20% with respect to the known devices. Moreover, the handlebar of the invention can be easily installed on a motorcycle, being interchangeable with the known steering devices without requiring specific adaptations of the motorcycle itself. This is achieved mainly due to the fact that the cross section profile at the handlebar ends (i.e. at end portions 30 and 40) remains circular, as in conventional handlebars, in this way allowing also an interchangeability of the handlebar terminals with conventional ones.

Furthermore, the device geometry allows the installation of the accessories of the motorcycle, such as knobs, brake/clutch levers, electric control blocks, mirrors, handlebar terminals and so on, without requiring a specific dimensional, production or technical adaptation of such components.

Generally speaking, it will be appreciated that the invention allows an optimal and ad hoc mechanical resistance to be obtained.

An example of the construction process of the steering device 1 will now be described.

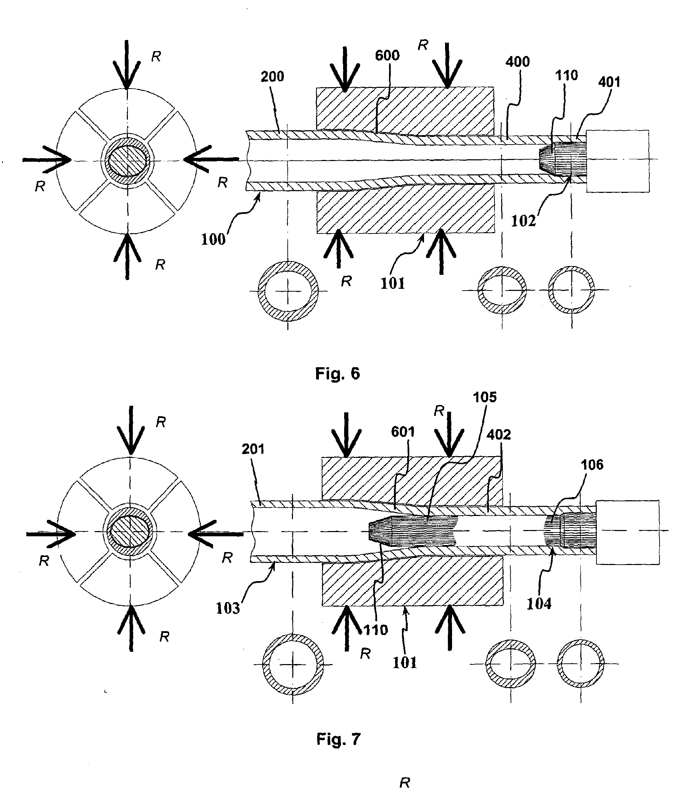

Fig. 6 shows a medial longitudinal section of the handlebar during its machining starting from an extruded tubular body 100. The latter has a circular external profile of diameter DCe, an elliptic internal profile concentric with the external one and therefore a non-uniform thickness circumferentially along each cross section. Starting from tubular body 100 it is possible to obtain directly, i.e. without the need for additional machining operations, the central portion 2 of the final handlebar as described with reference to Fig.s 1 and 3b, namely with a greater thickness *SCmax* at the most stressed direction and a smaller thickness *SCmin* at the least stressed direction. Therefore, machining is performed only at the tubular body regions corresponding to the transient portions 5 and 6, to be subsequently bent, and to the external portions 3 and 4.

The specific machining herein presented is based upon the so-called rotating hammering. More specifically, shaped hammering means 101 exerts a radial compression upon the tubular body 100 by acting directly upon the external surface of the latter in a radial direction R. Such compression plastically deforms the initial tubular body 100, reducing the dimensions of its external profile and accordingly of such body 100 in its entirety, so generating the final handlebar external profile.

Jointly with the hammering means 101, a shaped spindle 102 is used, which is positioned inside the longitudinal hole of tubular body 100 at the regions corresponding to the end sub-portions 30 and 40 of the final handlebar 1. Accordingly, by means of such spindle 102 the final internal profile of handlebar 1 at said end portions 30 and 40 is determined. In particular, due to the plastic deformation induced by the hammering means 101, the tubular body material "fills" the volume comprised between the working surface of the external hammers 101 and that of the spindle 102, copying the profile of both.

Therefore, in the present case hammers 101 with a working surface having a circular profile and a spindle 102 having too a circular profile and positioned concentrically to the hammers are used.

Spindle 102 has also a tapered conical end part 110 which facilitates its insertion.

By means of the process just described - and in particular due to the deformation produced by the hammers 101 - it is possible to obtain a final machined tubular body having two external lengths, corresponding to external portions 3 and 4 of final handlebar 1, of circular external profiles having a constant diameter smaller than the diameter of the length corresponding to central portion 2.

Analogously, due to the reduction in section with respect to the initial tubular body 100, the internal profile of the external lengths will have a shape analogous to that of the initial body, i.e. elliptic, but reduced in dimensions. Therefore, cross section thickness of such lengths varies circumferentially from *SEmax* to *SEmin,* as already described in conjunction with Fig. 4a. End parts of such lengths, corresponding to terminal portions 30 and 40, have instead a circular internal profile concentric to the external one. Therefore, at these parts thickness is constant and smaller or equal to *SEmin.*

Between the central length and the external lengths tapered lengths are obtained. The cross section of these tapered lengths decreases in a regular way, maintaining approximately the shape of the initial tubular body 100. Also in this case, cross section thickness of such lengths varies circumferentially from *SPmin* to *SPmax,* as already described in conjunction with Fig. 5. *SPmax* varies along the longitudinal axis of each tapered length from *SCmax* to *SEmax,* while *SPmin* varies from *SCmin* to *SEmin.*

In the partial view of Fig. 6, the mechanical piece includes, after machining, a first non-machined length 200, corresponding to central portion 2 of final handlebar 1, a second length 400, corresponding to second external portion 4 of final handlebar 1, and a third tapered length 600, corresponding to second transient portion 6 of final handlebar 1 and having an external diameter variable between DCe and DEe. Moreover, in such figure the end length corresponding to end sub-portion 40 is denoted by 401.

Both the external profile of tapered length 600 and the external diameter DEe of the end portion 401 of second length 400 are determined by the shaping of the hammering means 101.

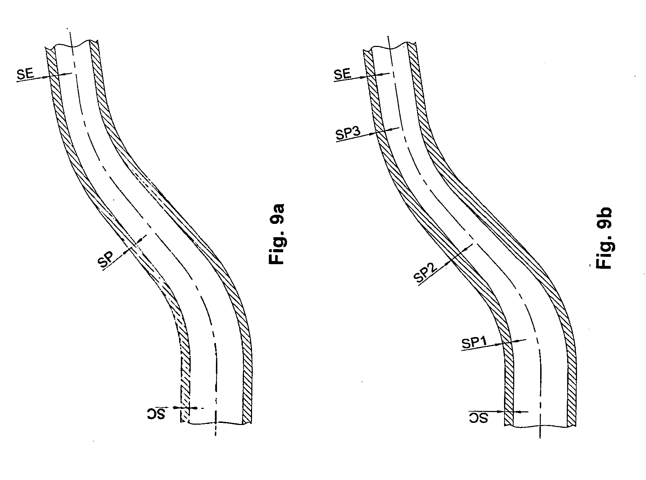

More particularly and as already explained above, the external profile of the handlebar is obtained by the direct radial action of the hammers' surface, while the internal elliptical profile is obtained by means of the deformation caused by the hammers acting upon the tube external surface, the material being left to concentrate towards the central region. Accordingly, the cross section of bent tubular length 600 and of end length 401 decreases in a regular way, copying the overall shape of the external profile. For this reason, in the specific example herein considered tube thickness is substantially uniform in a longitudinal direction, e.g. in direction of line A, as shown in Fig. 9a, with *SCI*=*SPI*=*SEI.*

The constant thickness of terminal part 401 of lengths 400 is obtained by using said spindle 102.

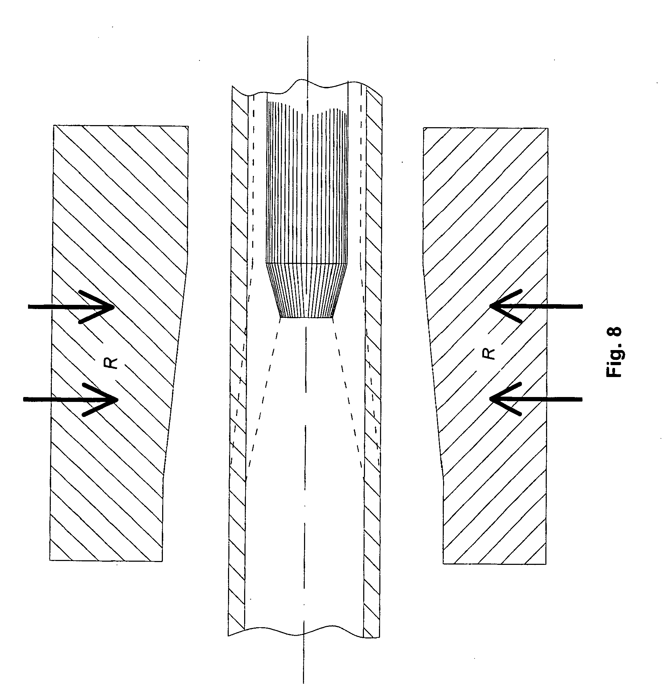

Figs. 7 and 8 show a medial longitudinal section of the handlebar of the invention according to the embodiment of Fig. 1 a during its machining starting from an extruded tubular body 103 having a circular external profile of diameter *DCe* and a circular internal profile concentric to the external one and of diameter *DCi.* Therefore, the thickness SC = *DCe*/*2* - *Dci*/*2* along the cross section is constant in this case.

The tubular body is machined by rotating hammering in a radial direction in the regions corresponding in this case to the transient and external portions of the final handlebar. Such machining too involves a plastic deformation of tubular body 103 performed at the tube external surface by hammering means 101 analogous to the previous ones and the use of a shaped spindle, here denoted by 104.

Shaped spindle 104 is positioned at an appropriate location inside the tube 103 and a deformation process analogous to the one already described takes place.

However, in this case the spindle 104 has two contiguous segments of different shapings. A first segment 105 has an elliptical cross section, oriented according to the desired final shaping of the internal tube section and positioned concentrically with the hammers 101 along the longitudinal axis of the latter (and of tubular body 103). A second spindle segment 106 has a circular cross section it too concentric with the hammers longitudinal axis. Also in this case spindle 104 has a tapered conical end part 110 which facilitates its insertion.

Hammering means 101 and spindle 104 act substantially as described with reference to Fig. 6, but, as already mentioned, spindle 104 is inserted not only at the end lengths but also at transient and external lengths of tube 103. Moreover, contrary to the first process and as shown in Fig. 9b, in a longitudinal direction parallel to line A the thickness of the tapered lengths, one of which denoted here by 601, varies from a value *SP1*, which approximately corresponds to the thickness *SCl* of the immediately adjacent central length 201, to a value *SP2*, greater than thickness *SP1*, and decreases immediately before the transient region to external length 402 to a thickness *SP3*, which approximately corresponds to the thickness *SEl* of adjacent external part 402.

Both the increase in thickness from *SP1* to *SP2* and the decrease from *SP2* to *SP3* are associated with the production process of the present example. In particular, in the present case spindle 104, which allows adjusting the tube internal shaping and accordingly the thickness of external length 402 and which is introduced at the end portion of this latter length, has a tapered conical part 110 which facilitates such insertion. Accordingly, during the rotating hammering process a volume corresponding to this conical part is generated. Upon increasing the reduction in diameter of length 402, at such volume an accumulation of material is generated, which accumulation produces said increase in longitudinal thickness from *SP1* to *SP2*, while such thickness decreases to SP3 in proximity of length 400 due to the presence of the main part (first segment 105) of spindle 104.

In summary, in this second production process the presence of the spindle 104, which represents a constrain for the free accumulation of material towards the center, determines a flux of material in the axial direction starting from central length 201, which determines the thickness variability in length 601.

The non-uniform thickness of the external lengths varies from a minimal value *SEmin* to a maximal value *SEmax,* whereas *SEmax* is greater than SC, and *SEmin* is smaller than SC, the latter being the thickness of the tube wall forming the central length. Thickness *SEt* of end lengths is constant and smaller than or equal to *SEmin.*

It will be better appreciated at this stage that the invention has the advantage of being implementable by technologies of machining generally speaking already available (apart of course for the specific profiles of the hammers and the spindle to be used), and therefore that it can be machined in an effective and low cost manner.

Furthermore, the described choice for the thicknesses distribution and section shapings allows also to improve resistance and adapt specifically the handlebar portions to shear stresses.

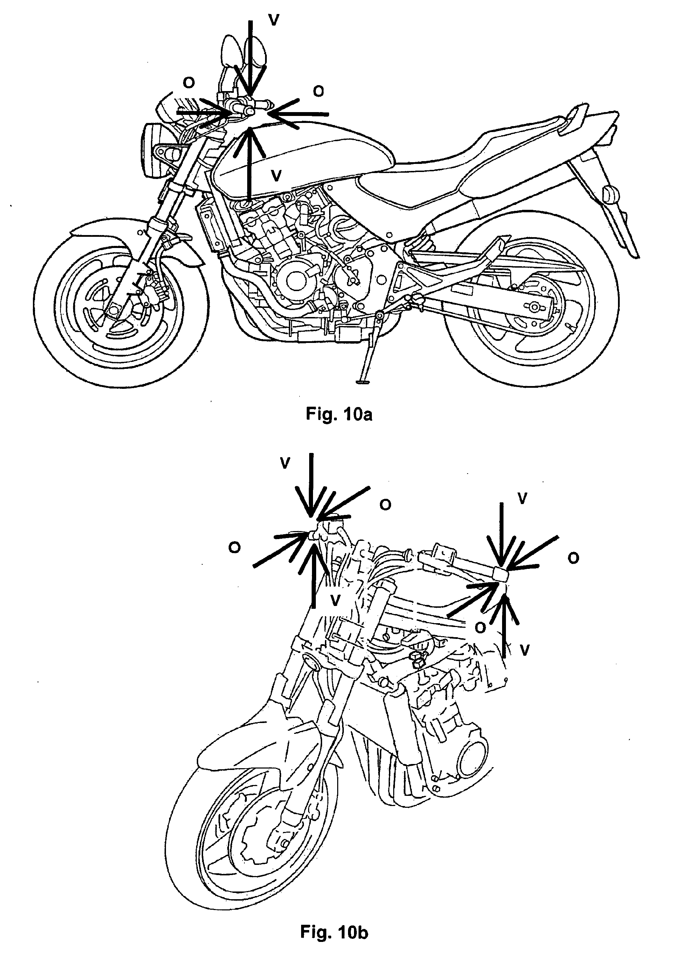

Figs. 10a and 10b show an example of a motorvehicle upon which the handlebar of the invention is installed. In these figures, the letters "O" and "V" denote the horizontal (transversal) direction, i.e. the vehicle traveling direction, and the vertical (gravitational) one, respectively.

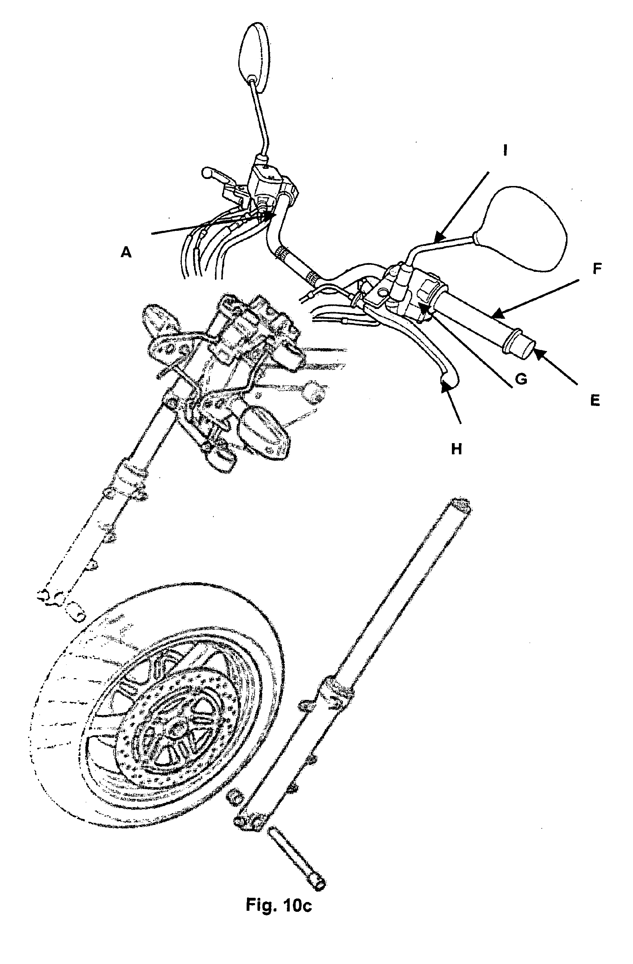

Fig. 10c illustrates an example of the handlebar of the invention, also in this case denoted by 1, wherein accessories are installed. In particular, in the present example handlebar terminals (E), handles (F), brake/clutch levers (G), electrical commands boxes (G) and mirrors (H) are provided for.

Such accessories interact with the vehicle at its handlebar, both at the external and internal surfaces (the latter at the ends) of the latter, exerting thereupon the compression/traction stresses already dealt with.

The present invention was hereto described with reference to preferred embodiments thereof. It is understood that there might be other embodiments referable to the same inventive kernel, all falling within the protective scope of the claims hereinafter.

## Claims

1. A steering handlebar (1), in particular for motorvehicles, having an overall elongated shape and comprising:
- a central portion (2) of a substantially rectilinear development, which central portion (2) has a hollow cross section of a substantially uniform wall thickness;
- a first (3) and a second (4) external portion, each of them too of a substantially rectilinear development according to a respective direction substantially diverging with respect to the development direction of said central portion (2), said external portions (3, 4) being arranged substantially symmetrically with respect to said central portion (2) one at a each side thereof,
wherein each of said external portions (3, 4) has a hollow cross section of non-uniform wall thickness, in such a way that a direction of greater resistance to flexional and/or shear stresses is obtained,
wherein each of said external portions (3, 4) has a respective end sub-portion (30, 40) having a cross section of a substantially uniform thickness; and
- a first (5) and a second (6) transient portion, each one having a substantially bent development and interposed between said central portion (2) and a respective first (3) or second (4) external portion,
wherein also each of said first (5) and second (6) transient portions has a hollow cross section of non-uniform wall thickness, in such a way that a direction of greater resistance to flexional and/or shear stresses is obtained,
wherein the arrangement is such that said direction of greater resistance is substantially parallel to the forward/backward traveling direction of the vehicle the handlebar (1) itself is to be installed on.

2. The handlebar (1) according to any of the preceding claims, wherein said hollow cross section of each of said external portions (3, 4) and/or transient portions (5, 6) and/or of said central portion (2) has a substantially circular external profile.

3. The handlebar (1) according to any of the preceding claims, wherein said hollow cross section of each of said external portions (3, 4) and/or transient portions (5, 6) has a substantially elliptic internal profile.

4. The handlebar (1) according to claim 3, wherein the arrangement is such that at said cross section the ellipse principal axis is substantially perpendicular to the vehicle forward/backward traveling direction.

5. The handlebar (1) according to any of the preceding claims, wherein said hollow cross section of each of said external portions (3, 4) and/or transient portions (5, 6) and/or of said central portion (2) is defined by an internal and an external profile concentrically arranged.

6. The handlebar (1) according to any of the preceding claims, wherein each of said external portions (3, 4) and said central portion (2) have a substantially circular external profile, with the diameter of the external portions (3, 4) being smaller than that of the central portion (2).

7. The handlebar (1) according to any of the preceding claims, wherein each of said transient portions (5, 6) has a substantially circular external profile, the diameter of which varies longitudinally along the development of the handlebar (1) itself.

8. The handlebar (1) according to the preceding claim, wherein said external diameter of each of said transient portions (5, 6) decreases from said central portion (2) towards said external portions (3, 4).

9. The handlebar (1) according to any of the preceding claims, wherein said central portion (2) has a substantially circular external and internal profile.

10. The handlebar (1) according to any of the preceding claims, wherein each of said end sub-portions (30, 40) has a substantially circular external and internal profile.

11. The handlebar (1) according to any of the preceding claims, wherein at least one of said central portion (2), external portions (3, 4) and transient portions (5, 6) has a substantially circular external profile.

12. The handlebar (1) according to any of the preceding claims, wherein each of said transient portions (5, 6) has a hollow cross-section with a wall thickness that varies longitudinally along the handlebar (1) itself.

13. The handlebar (1) according to any of the preceding claims, which is substantially symmetric with respect to a vertical plane passing through a median cross section of said central portion (2).

14. The handlebar (1) according to any of the preceding claims, which has an overall so-called "bull horns" shape.

15. The handlebar (1) according to any of the preceding claims, which is for a bicycle, a snowmobile or a water mobile.

## Patentansprüche

1. Lenkstange (1), insbesondere für Kraftfahrzeuge, die eine insgesamt langgestreckte Form hat und umfasst:
- einen zentralen Teil (2) mit einem im Wesentlichen geradlinigen Verlauf, wobei der zentrale Teil (2) einen hohlen Querschnitt mit einer im Wesentlichen gleichförmigen Wanddicke hat;
- einen ersten (3) und einen zweiten (4) externen Teil, von denen jeder auch einen im Wesentlichen geradlinigen Verlauf in einer Richtung hat, die von der Verlaufsrichtung des zentralen Teils (2) wesentlich abweicht, wobei die externen Teile (3, 4) im Wesentlichen symmetrisch in Bezug auf den zentralen Teil (2) angeordnet sind, einer auf jeder Seite desselben,
wobei jeder der externen Teile (3, 4) einen hohlen Querschnitt mit ungleichförmiger Wanddicke hat, derart, dass eine Richtung größeren Widerstands gegen Biege- und/oder Scherbeanspruchungen erzielt ist,
wobei jeder der externen Teile (3, 4) einen Endunterabschnitt (30, 40) hat, welcher einen Querschnitt mit einer im Wesentlichen gleichförmigen Dicke hat; und
- einen ersten (5) und zweiten (6) Übergangsteil, von denen jeder einen im Wesentlichen gebogenen Verlauf hat und zwischen dem zentralen Teil (2) und dem ersten (3) bzw. zweiten (4) externen Teil angeordnet ist,
wobei auch der erste (5) und der zweite (6) Übergangsteil jeweils einen hohlen Querschnitt mit ungleichförmiger Wanddicke haben, derart, dass eine Richtung größeren Widerstands gegen Biege- und/oder Scherbeanspruchungen erzielt ist,
wobei die Anordnung so getroffen ist, dass die Richtung größeren Widerstands zu der Vorwärts/Rückwärts-Fahrrichtung des Fahrzeuges, an dem die Lenkstange (1) selbst zu installieren ist, im Wesentlichen parallel ist.

2. Lenkstange (1) nach einem der vorhergehenden Ansprüche, wobei der hohle Querschnitt von jedem der externen Teile (3, 4) und/oder der Übergangsteile (5, 6) und/oder des zentralen Teils (2) ein im Wesentlichen kreisförmiges äußeres Profil hat.

3. Lenkstange (1) nach einem der vorhergehenden Ansprüche, wobei der hohle Querschnitt von jedem der externen Teile (3, 4) und/oder der Übergangsteile (5, 6) ein im Wesentlichen elliptisches inneres Profil hat.

4. Lenkstange (1) nach Anspruch 3, wobei die Anordnung so getroffen ist, dass in dem Querschnitt die Ellipsenhauptachse zu der Vorwärts/Rückwärts-Fahrrichtung des Fahrzeuges im Wesentlichen rechtwinkelig ist.

5. Lenkstange (1) nach einem der vorhergehenden Ansprüche, wobei der hohle Querschnitt von jedem der externen Teile (3, 4) und/oder der Übergangsteile (5, 6) und/oder des zentralen Teils (2) durch ein inneres und ein äußeres Profil, die konzentrisch angeordnet sind, gebildet ist.

6. Lenkstange (1) nach einem der vorhergehenden Ansprüche, wobei jeder der externen Teile (3, 4) und der zentrale Teil (2) ein im Wesentlichen kreisförmiges äußeres Profil haben, wobei der Durchmesser der externen Teile (3, 4) kleiner ist als der des zentralen Teils (2).

7. Lenkstange (1) nach einem der vorhergehenden Ansprüche, wobei jeder der Übergangsteile (5, 6) ein im Wesentlichen kreisförmiges äußeres Profil hat, dessen Durchmesser longitudinal längs des Verlaufes der Lenkstange (1) selbst variiert.

8. Lenkstange (1) nach dem vorhergehenden Anspruch, wobei der äußere Durchmesser von jedem der Übergangsteile (5, 6) von dem zentralen Teil (2) aus zu den externen Teilen (3, 4) hin abnimmt.

9. Lenkstange (1) nach einem der vorhergehenden Ansprüche, wobei der zentrale Teil (2) ein im Wesentlichen kreisförmiges äußeres und inneres Profil hat.

10. Lenkstange (1) nach einem der vorhergehenden Ansprüche, wobei jeder der Endunterabschnitte (30, 40) ein im Wesentlichen kreisförmiges äußeres und inneres Profil hat.

11. Lenkstange (1) nach einem der vorhergehenden Ansprüche, wobei von dem zentralen Teil (2), den externen Teilen (3, 4) und den Übergangsteilen (5, 6) wenigstens einer ein im Wesentlichen kreisförmiges Profil hat.

12. Lenkstange (1) nach einem der vorhergehenden Ansprüche, wobei jeder der Übergangsteile (5, 6) einen hohlen Querschnitt mit einer Wanddicke hat, die longitudinal längs der Lenkstange (1) selbst variiert.

13. Lenkstange (1) nach einem der vorhergehenden Ansprüche, die in Bezug auf eine Vertikalebene, welche durch einen mittleren Querschnitt des zentralen Teils (2) hindurchgeht, im Wesentlichen symmetrisch ist.

14. Lenkstange (1) nach einem der vorhergehenden Ansprüche, die insgesamt eine sogenannte "Stierhörner"-Form hat.

15. Lenkstange (1) nach einem der vorhergehenden Ansprüche, die für ein Fahrrad, ein Schneemobil oder ein Wassermobil ist.

## Revendications

1. Guidon (1), en particulier pour véhicules à moteur, ayant une forme générale allongée et comprenant :
- une partie centrale (2) à développement sensiblement rectiligne, laquelle partie centrale (2) a une section creuse à épaisseur de paroi sensiblement uniforme ;
- une première (3) et une deuxième (4) parties externes, chacune d'elles également à développement sensiblement rectiligne dans une direction respective divergeant sensiblement par rapport à la direction de développement de ladite partie centrale (2), lesdites parties externes (3, 4) étant disposées d'une manière sensiblement symétrique par rapport à ladite partie centrale (2), de part et d'autre de celle-ci,
dans laquelle chacune desdites parties externes (3, 4) a une section transversale creuse à épaisseur de paroi non uniforme, de manière à obtenir une direction résistant davantage aux contraintes de flexion et/ou de cisaillement,
dans lequel chacune desdites parties externes (3, 4) a une sous-partie d'extrémité respective (30, 40) à section transversale d'épaisseur sensiblement uniforme ; et
- une cinquième (5) et une sixième (6) parties de transition, chacune ayant un développement sensiblement incurvé et étant intercalée entre ladite partie centrale (2) et une première (3) ou seconde (4) partie externe respective,
dans lequel chacune desdites première (5) et deuxième (6) parties de transition a également une section creuse à épaisseur de paroi non uniforme, de manière à obtenir une direction de plus grande résistance aux contraintes de flexion et/ou de cisaillement,
l'agencement étant tel que ladite direction de plus grande résistance est sensiblement parallèle au sens de circulation en marche avant/marche arrière du véhicule sur lequel est destiné à être installé le guidon (1) lui-même.

2. Guidon (1) selon l'une quelconque des revendications précédentes, dans lequel ladite section creuse de chacune desdites parties externes (3, 4) et/ou parties de transition (5, 6) et/ou de ladite partie centrale (2) a un profil extérieur sensiblement circulaire.

3. Guidon (1) selon l'une quelconque des revendications précédentes, dans lequel ladite section creuse de chacune desdites parties externes (3, 4) et/ou parties de transition (5, 6) a un profil intérieur sensiblement elliptique.

4. Guidon (1) selon la revendication 3, dans lequel l'agencement est tel que, au niveau de ladite section, l'axe principal de l'ellipse est sensiblement perpendiculaire au sens de circulation en marche avant/marche arrière du véhicule.

5. Guidon (1) selon l'une quelconque des revendications précédentes, dans lequel ladite section creuse de chacune desdites parties externes (3, 4) et/ou parties de transition (5, 6) et/ou de ladite partie centrale (2) est définie par un profil intérieur et un profil extérieur à disposition concentrique.

6. Guidon (1) selon l'une quelconque des revendications précédentes, dans lequel chacune desdites parties externes (3, 4) et ladite partie centrale (2) ont un profil extérieur sensiblement circulaire, le diamètre des parties externes (3, 4) étant plus petit que celui de la partie centrale (2).

7. Guidon (1) selon l'une quelconque des revendications précédentes, dans lequel chacune desdites parties de transition (5, 6) a un profil extérieur sensiblement circulaire dont le diamètre varie longitudinalement sur le développement du guidon (1) lui-même.

8. Guidon (1) selon la revendication précédente, dans lequel ledit diamètre extérieur de chacune desdites parties de transition (5, 6) diminue de ladite partie centrale (2) vers lesdites parties externes (3, 4).

9. Guidon (1) selon l'une quelconque des revendications précédentes, dans lequel ladite partie centrale (2) a un profil extérieur et un profil intérieur sensiblement circulaires.

10. Guidon (1) selon l'une quelconque des revendications précédentes, dans lequel chacune desdites sous-parties d'extrémités (30, 40) a un profil extérieur et un profil intérieur sensiblement circulaires.

11. Guidon (1) selon l'une quelconque des revendications précédentes, dans lequel au moins une desdites partie centrale (2), parties externes (3, 4) et parties de transition (5, 6) a un profil extérieur sensiblement circulaire.

12. Guidon (1) selon l'une quelconque des revendications précédentes, dans lequel chacune desdites parties de transition (5, 6) a une section creuse avec une épaisseur de paroi qui varie longitudinalement le long du guidon (1) lui-même.

13. Guidon (1) selon l'une quelconque des revendications précédentes, sensiblement symétrique par rapport à un plan vertical passant par une section médiane de ladite partie centrale (2).

14. Guidon (1) selon l'une quelconque des revendications précédentes, ayant une forme générale dite "en cornes de vaches".

15. Guidon (1) selon l'une quelconque des revendications précédentes, destiné à une motocyclette, une motoneige ou une motomarine.
